(19) Europäisches Patentamt
European Patent Office
Office européen des brevets

(11) **EP 2 706 823 B1**

(12) **FASCICULE DE BREVET EUROPEEN**

(45) Date de publication et mention
de la délivrance du brevet:
**26.06.2019 Bulletin 2019/26**

(51) Int Cl.:
***H05B 37/02*** *(2006.01)* ***H05B 33/08*** *(2006.01)*

(21) Numéro de dépôt: **13368028.0**

(22) Date de dépôt: **10.09.2013**

(54) **LAMPE ÉLECTRIQUE PORTATIVE DOTÉE D'UN DISPOSITIF DE RÉGULATION AUTOMATIQUE DE L'ÉCLAIRAGE**

TRAGBARE ELEKTRISCHE LAMPE, DIE MIT EINER VORRICHTUNG ZUR AUTOMATISCHEN BELEUCHTUNGSREGULIERUNG AUSGESTATTET IST

PORTABLE ELECTRIC LAMP PROVIDED WITH A DEVICE FOR AUTOMATICALLY ADJUSTING THE ILLUMINATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.09.2012 FR 1202417**

(43) Date de publication de la demande:
**12.03.2014 Bulletin 2014/11**

(73) Titulaire: **Zedel S.A.**
**38920 Crolles (FR)**

(72) Inventeurs:
• **Genthon, Fabien**
**38920 Crolles (FR)**

• **Pellat-Finet, Romain**
**38000 Grenoble (FR)**

(74) Mandataire: **Schuffenecker, Thierry**
**120 Chemin de la Maure**
**06800 Cagnes sur Mer (FR)**

(56) Documents cités:
**EP-A1- 1 734 502     EP-A1- 2 498 583**
**WO-A1-2007/069149     WO-A1-2008/129453**
**WO-A1-2009/013698     FR-A1- 2 930 706**
**US-A1- 2004 211 888     US-A1- 2005 099 798**
**US-A1- 2012 275 140     US-B1- 7 410 271**

**Description**

**Domaine technique de l'invention**

La présente invention concerne le domaine des lampes électriques portatives et notamment, une lampe électrique portative dotée d'un dispositif de régulation automatique de l'éclairage.

**Etat de la technique**

La demanderesse de la présente demande de brevet a commercialisé une lampe portative, de type lampe frontale, doté d'un éclairage dit « réactif » ou «dynamique» qui est décrite dans la demande de brevet WO2009/133309. Brièvement, comme cela est illustrée dans la figure 1, il s'agit d'une lampe frontale comportant au moins une diode électroluminescente 11 de type LED ainsi qu'un capteur optique 14 logé dans son voisinage et destiné à capter un signal représentatif de la lumière réfléchie par la surface d'un objet 16 éclairé par la lampe. Un circuit de commande 13 assure un traitement de ce signal dans le but de réguler automatiquement la puissance de la LED en fonction d'un seuil prédéterminé. De cette manière, une régulation automatique du faisceau lumineux émis par la lampe est effectuée sans autre action manuelle afin d'adapter l'éclairage à l'environnement, tout en gérant la consommation en énergie.

Le principe de cet éclairage « dynamique » constitue indéniablement une avancée significative dans le domaine des lampes frontales, et plus généralement de l'éclairage portatif.

Pour autant, en dépit des avantages significatifs qu'elle procure, cette lampe frontale a fait naître des problèmes nouveaux.

On a en effet observé une sensibilité du système de commande par rapport aux sources d'éclairage parasites.

Par exemple si l'utilisateur éclaire une scène au loin et qu'un obstacle - même de taille modeste - vient à réfléchir une partie de la lumière produite par la lampe, le système de régulation peut s'en trouver perturbé et ainsi réduire la puissance d'émission des LED même lorsque cela n'est pas utile ou souhaitable.

Dans un second exemple, on a noté une perturbation dans la régulation lumineuse lorsque le porteur de la lampe marche sur une route et vient à croiser les feux d'un véhicule automobile roulant en sens inverse. Dans cette situation, comme précédemment, le système de régulation vient à intégrer la lumière parasite renvoyée par les feux et réduit une fois encore de manière inopportune la luminosité de la lampe.

On peut enfin évoquer un troisième exemple - celui d'un grimpeur à la corde - qui voit une fois encore son éclairage dynamique perturbé par le passage périodique de la corde devant le photocapteur.

Une solution à ce problème est décrite dans les deux demandes de brevet PCT/EP2012/000982 et PCT/EP2012/000984, toutes deux déposées le 6 Mars 2012 par la Demanderesse de la présente demande de brevet et non publiées à la date de dépôt de la présente demande de brevet. Cette solution passe par l'utilisation d'un capteur d'images associé à un processeur d'image pouvant traiter les images dans le but de permettre une commande plus sophistiquée, soit de la luminosité des LEDs, soit de la géométrie des faisceaux produits par elles.

Pour autant ces solutions requièrent une architecture bien plus sophistiquée venant accroître significativement le coût de fabrication des lampes portatives qui en seraient dotées.

Un autre état de la technique est le document US2005/099798 décrivant l'utilisation d'un capteur de lumière pour mesurer la lumière ambiante dans un système d'éclairage a LEDs portatif.

Le problème à résoudre vise donc à proposer une lampe réactive ou dynamique améliorée tout en restant économique à fabriquer.

**Exposé de l'invention**

C'est un but de la présente invention que de réaliser une lampe frontale économique dotée d'un mécanisme de régulation avancé permettant d'améliorer l'efficacité et le confort d'utilisation pour le porteur de la lampe.

C'est un autre but de la présente invention que de réaliser un procédé de commande amélioré de l'intensité lumineuse d'une lampe frontale dans le but d'accroître le confort d'utilisation de la lampe et de rendre plus robuste sa régulation par rapport à diverses sources d'éclairages parasites.

C'est un autre but de la présente invention consiste à réaliser une lampe frontale dotée de fonctionnalités nouvelles utilisables dans un grand nombre d'applications.

L'invention réalise ces buts au moyen d'une lampe portative comportant:

- une source lumineuse comportant une ou plusieurs sources permettant de générer au moins un faisceau lumineux;
- des moyens permettant de commander la luminosité desdits faisceaux en réponse à une information ou signal de commande;
- un module de commande destiné à générer ladite information ou ledit signal de commande;

caractérisée en ce que ledit module de commande comporte au moins un photocapteur et un circuit de régulation commandant une phase d'extinction pendant une durée non visible par le porteur de la lampe, d'un ou plusieurs faisceaux, ladite phase d'extinction étant combinée avec au moins une mesure de diversité comportant la collecte d'une pluralité d'éléments d'information sur le milieu ambiant réfléchissant. réalisé par le ou les capteur(s)

De préférence, la ou les sources sont de type LED, à faible consommation électrique.

Dans un mode de réalisation, la lampe comporte une unique photocapteur et un unique faisceau.

En revanche, dans un mode de réalisation préféré, la lampe comporte un unique photocapteur et deux faisceaux respectivement Large et Etroit.

En particulier, le circuit de régulation provoque périodiquement:

- l'extinction dudit faisceau Etroit, associée à une première mesure effectuée par le photocapteur;
- l'extinction dudit faisceau Large, associée à une seconde mesure effectuée par le photocapteur .

De préférence, le circuit de régulation effectue le calcul de la luminosité ambiante suivant la formule:

$$L_{ambiante} = M2 + M3 - M1$$

avec

M1 étant une mesure effectuée lorsque les deux faisceaux sont allumés;
M2 étant la mesure lors de l'extinction du faisceau Etroit;
M3 étant la mesure lors de l'extinction du faisceau Large.

Diverses stratégies de régulation sont possibles.

Dans une première réalisation, le circuit de régulation adapte la puissance du faisceau lumineux en fonction des seules valeurs de L = M1 - M3 et E = M1 - M2 , excluant l'intervention de la luminosité ambiante. De cette manière, l'on peut venir s'affranchir de perturbation émanant de la luminosité ambiante (feux de voiture par exemple).

Alternativement, l'on pourra décider, par exemple suivant un mode de configuration de la lampe, que le circuit de régulation adapte la puissance du faisceau lumineux en fonction de la seule valeur $L_{ambiante}$.

Dans d'autres modes de réalisation, les deux faisceaux pourront être désaxés.

De préférence, la lampe comportera en outre des moyens de configuration, notamment suivant un ou plusieurs profils déterminés, ladite configuration étant réalisée au moyen d'un port USB permettant la communication avec un ordinateur, une tablette tactile ou un téléphone intelligent (*smartphone* suivant la terminologie anglo-saxonne)

Enfin, suivant un aspect de l'invention, le ou les faisceau pourront être avantageusement modulés de manière à faciliter d'avantage la discrimination des faisceaux lumineux.

**Description des dessins**

D'autres caractéristiques, but et avantages de l'invention apparaîtront à la lecture de la description et des dessins ci-après, donnés uniquement à titre d'exemples non limitatifs. Sur les dessins annexés :

La figure 1 illustre l'architecture générale d'une lampe à éclairage dynamique conventionnelle.

La figure 2 représente un synoptique d'un premier mode de réalisation de l'invention, comportant un photocapteur et un faisceau.

La figure 3 montre une variante de la lampe illustrée en figure 2, et comportant une architecture à base de microprocesseur.

Les figures 4a et 4b illustrent deux variantes de fonctionnement du mécanisme de régulation.

La figure 5 illustre un second mode de réalisation basé sur la combinaison d'un unique photocapteur et deux faisceaux, respectivement large et étroit.

La figure 6 est un chronogramme illustratif du fonctionnement du dispositif de régulation de la lampe de la figure 5

La figure 7 est un troisième mode de réalisation illustrant une lampe dotée de deux capteurs désaxés.

La figure 8 illustre un quatrième mode de réalisation d'une lampe comportant un générateur de faisceau modulé.

**Description d'un mode de réalisation préféré**

L'on décrit à présent comment l'on peut venir significativement améliorer le fonctionnement d'une lampe réactive ou dynamique, à base de photocapteur de type monocapteur. D'une manière générale, on entend par monocapteur un capteur susceptible de générer une information analogique ou numérique élémentaire, à l'exclusion d'un capteur d'images générant une information structurée en une matrice composée de pixels.

Le photocapteur présente clairement l'avantage, par rapport à un capteur d'images, de permettre une réalisation économique à faible coût de fabrication.

Clairement, l'on considérera le cas d'une lampe portative, telle qu'une lampe frontale, une lampe de poche ou tout autre dispositif mobile doté d'un système d'éclairage autonome.

Suivant un des aspects de l'invention, la lampe frontale comporte un ensemble de **n** photo-capteurs (n>=1) et **m** faisceaux lumineux (m>=1) qui, le cas échéant, peuvent comporter un ou plusieurs faisceaux, pouvant être de luminosité et de géométrie différentes.

Suivant un des aspects de la présente invention, la lampe comporte un mécanisme de régulation basée sur une extinction périodique, pendant une durée non visible par l'utilisateur, d'un ou plusieurs faisceaux ainsi que la mesure par le ou les capteurs durant cette extinction périodique, du milieu ambiant réfléchissant.

La ou les mesures réalisées au sein de la lampe portative, dans différentes configurations et situations d'éclairement, conduisent à la collecte d'une diversité d'éléments d'information sur le milieu ambiant réfléchissant et permet, par conséquent, une connaissance bien plus fine de la "réponse" du milieu ambiant réfléchissant.

Il en résultera ainsi la possibilité d'élaborer une stratégie de commande de la luminosité de la lampe qui pourra être bien plus sophistiqué que celui que l'on connaissait.

Afin d'illustrer les nombreuses modalités d'application de la nouvelle solution qui est préconisée, l'on va décrire plusieurs modes de réalisation :

- un mode de réalisation comportant un unique photocapteur et un unique faisceau ;
- un mode de réalisation comportant un unique photocapteur et deux faisceaux, respectivement étroit et large.

**1. Description d'un premier mode de réalisation (unique photocapteur; unique faisceau)**

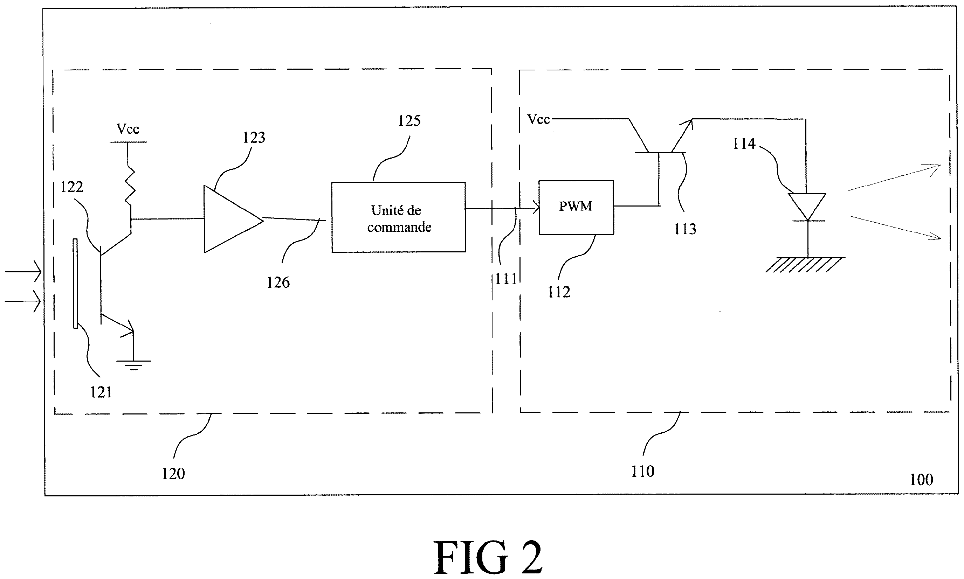

La figure 2 illustre plus particulièrement une lampe frontale 100 comportant un unique photocapteur associé à un unique faisceau lumineux, obtenu à partir d'une source lumineuse quelconque (ampoule, LED, OLED etc...)

L'on constate que la lampe 100 comporte un module de puissance 110 associé à un module de commande 120.

Le module de puissance 110 comporte spécifiquement tous les composants que l'on trouve conventionnellement dans une lampe à LEDs pour la production d'un faisceau lumineux de forte intensité.

Le circuit comporte une source d'alimentation, telle qu'une batterie (non représentée) générant une tension d'alimentation **Vcc,** une ou plusieurs diodes LED (une seule diode 114 étant illustrée dans la figure permettant de générer l'unique faisceau) alimentée(s) par un commutateur de puissance 113 de type à semiconducteur tel qu'un transistor bipolaire, un transistor FET (*Field Effect Transistor*) ou MOS (*Metal Oxyde Secomiconductor*) ou MOSFET. Pour réduire les pertes Joules, l'on vient commander le commutateur 113 au moyen d'une modulation en largeur d'impulsion MLI (ou *Pulse Width Modulation* dans la littérature anglo-saxonne), bien connue d'un homme du métier et similaire à celle que l'on connaît dans les circuits audio de classe D. Cette modulation est générée au moyen d'un circuit PMW 112 commandé lui-même, sur son entrée 111, par un signal de commande.

D'une manière générale, les composants qui composent le module de puissance 110 - commutateurs et circuits - sont bien connus d'un homme du métier et l'exposé sera délibérément allégé à cet égard dans une souci de concision. De même, le lecteur sera renvoyé aux ouvrages généraux traitant des divers aspects de la modulation MLI (ou PWM).

On observera par ailleurs que le mode de réalisation qui est décrit, basé sur une modulation en largeur d'impulsion, n'est qu'un mode de réalisation possible et qu'on pourra lui substituer, ou éventuellement lui associer, un autre circuit de puissance, basée sur l'utilisation de convertisseurs de tension de type convertisseurs « *buck* » ou « *boost* », bien connus d'un homme du métier, de manière à générer les niveaux de tension adéquats pour alimenter en courant les diodes LEDs.

Un module de commande 120 génère le signal de commande transmis à l'entrée 111 du module de puissance 110 dans le but de venir piloter le circuit PWM 112 pour commander l'intensité lumineuse produite par les LEDs.

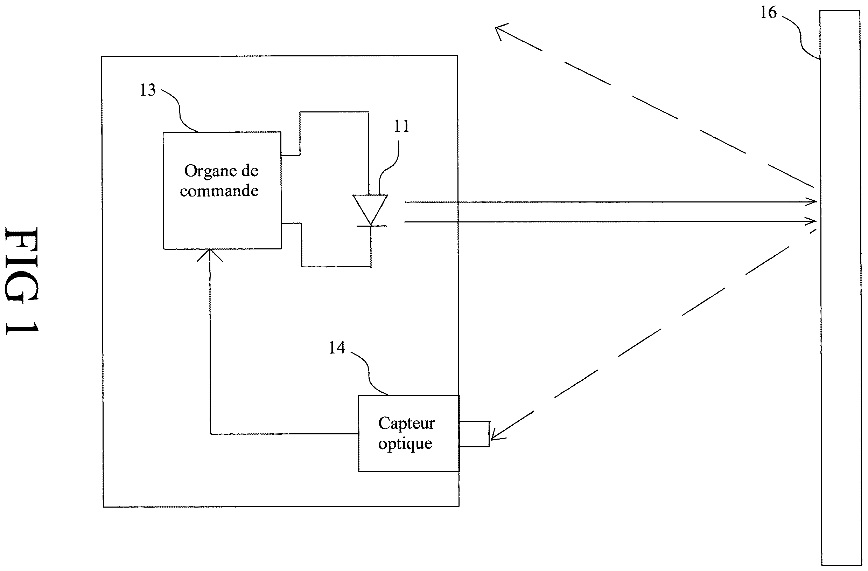

Le module de commande comporte un capteur 122 localisé derrière un système optique 121 ayant optionnellement une optique adaptée pour la focalisation du signal lumineux réfléchi devant être capté. La figure 1 illustre l'utilisation d'un photocapteur monté en émetteur commun apportant un premier gain en tension mais un homme du métier comprendra aisément qu'il ne s'agit ici que d'un mode de réalisation nullement limitatif. Alternativement, l'on pourra utiliser d'autres circuits permettant de capter ce rayonnement focalisé par l'optique 121. Dans un mode de réalisation particulier, l'on captera le rayonnement au sein d'un cône ayant un angle de l'ordre de 10 à 20 degrés autour de l'axe de la lampe ou de l'axe du photocapteur 122.

On notera par ailleurs, et cela est un avantage de la présente invention, que l'amélioration du système de régulation qui sera décrit plus loin, permet d'accroître significativement la valeur de l'angle du cône, de manière à rendre la capture de la lumière réfléchie moins sensibles aux obstacles locaux.

Dans un mode de réalisation particulier, le capteur pourra être un capteur disposé au sein d'un circuit intégré, réalisé au moyen d'un composant cristallin générant une chargé électrique de surface lorsqu'il est exposé à un rayonnement lumineux. Une variation du rayonnement lumineux perçu par le capteur influe une variation de la quantité de charge, laquelle peut être mesurée au moyen d'un amplificateur à effet de champ (*Field Effect Transistor*) par exemple, ou tout circuit adéquat.

De manière générale, le signal capté par le capteur 122 est transmis à un circuit amplificateur 123 assurant, à la fois, une amplification convenable de ce signal mais également un éventuel filtrage pour le conditionner et n'en retenir que les composantes fréquentielles utiles et dénuées de bruit. En particulier, l'on notera que le détecteur étant sensible à une vaste gamme de fréquences, et l'on pourra alors, dans un mode de réalisation particulier, venir filtrer le signal capté de manière à ne retenir que les radiations souhaitables.

Le circuit amplificateur 123 génère ainsi une composante analogique amplifiée du rayonnement capté par l'élément 122, laquelle composante est transmise via une électrode 126 à une unité de commande 125 capable de traiter ce signal dans le but de générer le signal de commande transmis à l'entrée 111 du module PWM 112.

L'unité de commande 125 pourra être réalisée de multiples manières.

Dans un mode de réalisation particulièrement simple, l'unité de commande 125 pourra être réalisé au moyen de composants analogiques de manière à générer le signal de commande 111.

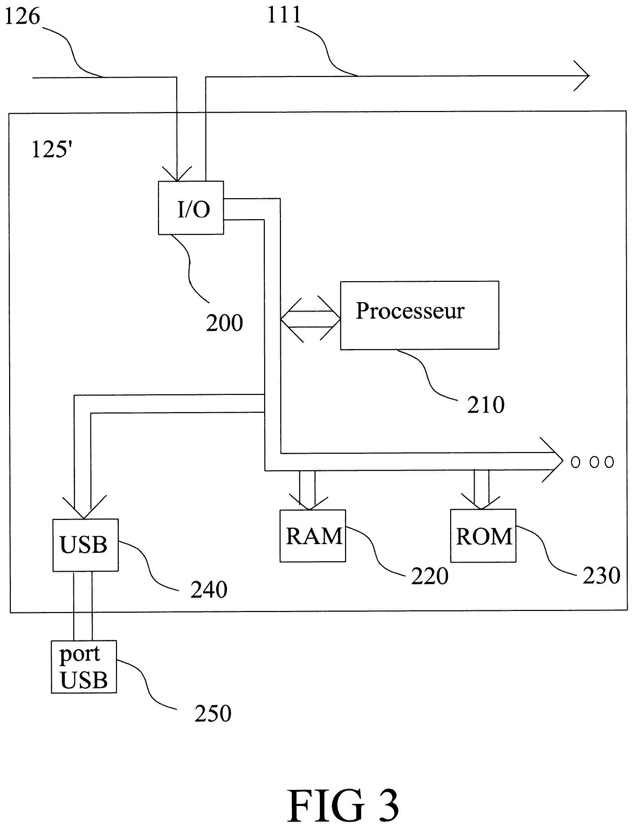

Alternativement, l'on pourra recourir, d'emblée à un circuit architecturé autour d'un microprocesseur, comme cela est illustré dans la figure 3, montrant un circuit de commande - référencé 125' - comportant un processeur CPU 210 (*Central Processing Unit* dans la littérature anglo-saxonne) ayant accès, via un bus d'adresses, de données et de commande conventionnel à de la mémoire RAM 220, de la mémoire ROM (*Read Only Memory*) ou EEPROM (*Electrically Erasable Programmable Read Only Memory*) pour le stockage d'instructions de commande et de micro-programmes et d'un module d'entrée/sortie 200 permettant l'interfaçage avec des signaux extérieurs, dont notamment le signal de sortie du circuit amplificateur 123 sur l'électrode 126 et également le signal de commande du module PWM 112 transmis sur le conducteur 111.

Optionnellement, l'unité de commande 125' sera dotée d'un module USB 240 (*Universal Serial Bus*) permettant l'échanges de données via une interface série normalisée 250 suivant le Standard.

De cette manière, l'unité de commande peut communiquer avec un dispositif de traitement de données tel qu'un ordinateur ou ordinateur portable.

Une telle communication est utile notamment pour l'échange de données de configuration, tels que des « profils » permettant de venir stocker, en tant que de besoin, des données de réglages de la lampe en fonction de son utilisation souhaitée par son propriétaire. En particulier, la fonction de sécurité pourra être débrayable grâce à l'interfaçage de la lampe via le port USB.

Accessoirement, la connexion USB à un ordinateur pourra également servir à recharger la batterie alimentant en énergie la lampe.

Outre le processeur 210, la mémoire RAM 220 et la mémoire ROM 230, l'unité de commande 125' peut comporter divers circuits électroniques, par exemple des éléments tampons, des circuits compteurs, des registres annexes bien connus d'un homme du métier, qu'il ne sera pas nécessaire de détailler plus avant.

Comme on le voit, l'unité de commande 125' présente une forme plus sophistiquée que la forme simple décrite en relation avec la figure 2 permettant de générer le signal de commande 111. D'une manière générale, l'on notera que le terme "signal" mentionné précédemment renvoie à une grandeur électrique - courant ou tension - permettant de provoquer la commande du module de puissance, et notamment la modulation MLI servant à alimenter en courant la diode LED 114. Il ne s'agit ici que d'un mode particulier de réalisation, étant entendu qu'il sera possible de substituer au "signal de commande 110" toute "information de commande", par exemple une information logique stockée dans un registre (résultat du traitement numérique effectué par le calculateur 210) et transmise par tout moyen approprié au module de puissance 110 dans le but de commander la puissance d'émission du faisceau lumineux. Dans un mode de réalisation particulier, l'on pourra même envisager que les deux modules de commande et de puissance soient intégrés dans un même module ou circuit intégré.

Un homme du métier comprendra donc aisément que lorsque l'on se réfère à un "signal de commande 110", l'on englobe indistinctement les réalisations recourant à une grandeur électrique de commande - courant ou tension - ainsi que les réalisations dans lesquelles la commande est réalisée au moyen d'une information logique transmise au sein du circuit de puissance. Pour cette raison, l'on parlera ci-après indistinctement de *signal* ou *d'information* de commande.

L'unité de commande 125 (resp. 125') de la lampe illustrée dans la figure 2 (resp. 3') fonctionne de la manière suivante : périodiquement, l'unité de commande provoque l'extinction de l'unique faisceau lumineux produit par la LEDS 114 procède à une première mesure M1 qui sera une mesure représentative de la lumière ambiante $L_{ambiante}$. Puis, l'unité de commande effectue une seconde mesure M2 réalisé durant l'allumage de la LED de manière à obtenir une nouvelle information qui, en substance, permettra de déterminer la part de la lumière réfléchie R résultant du faisceau lumineux de la LED 114, suivant la formule :

$$R = M2 - M1$$

De cette manière, l'on obtient une information plus précise que celle que l'on obtenait de manière classique avec la lampe conventionnelle (dans laquelle la mesure était effectuée sans extinction des LEDs), puisqu'elle permet d'obtenir une représentation de la lumière ambiante et surtout la réponse spécifique de la lampe à la lumière générée par la Led 114.

Une telle information est des plus utiles pour améliorer la stratégie de régulation du circuit de commande 125. (resp. 125'). En particulier, l'on pourra décider, et cela est un avantage significatif par rapport à la lampe conventionnelle, que l'on viendra réduire la luminosité des LEDs uniquement lorsque l'on constatera un accroissement de la partie R correspondant à la part de la lumière générée par la LED 114.

En particulier, dans le cas d'un utilisateur marchant de nuit sur la route et venant à croiser les phares d'un véhicule automobile, le système de régulation pourra ainsi déterminer que la lumière de ces phares fait partie de la lumière ambiante et, par conséquent, s'abstiendra de réduire la luminosité des LEDs malgré l'accroissement de la mesure M2.

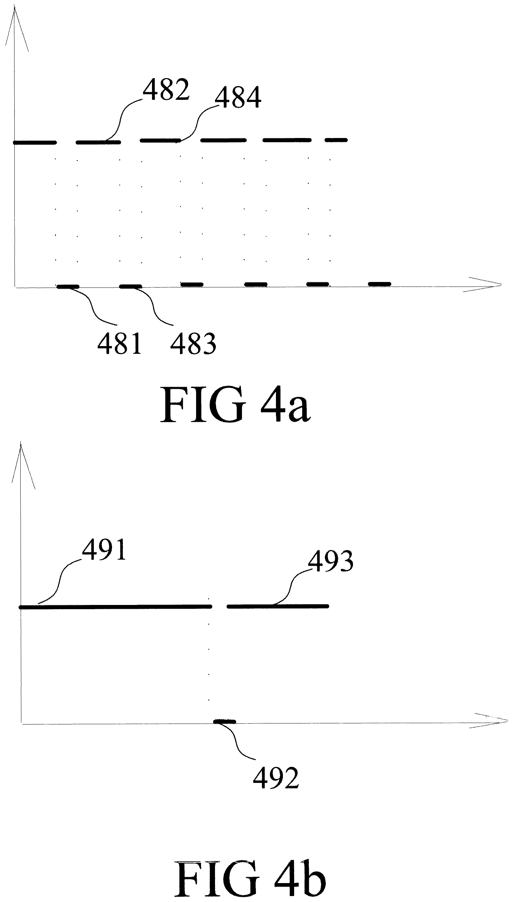

La figure 4a illustre plus particulièrement le fonctionnement d'un mécanisme de régulation adapté à la modulation en largeur d'impulsion. Le chronogramme (le temps étant représenté en abcisse et la luminosité en ordonnée) illustre en effet une modulation en largeur d'impulsion comportant une alternance de phase d'allumage de la lampe (482, 483...) et des phases d'extinction (481, 483), dont les durées respective permettent de fixer le rapport cyclique et, par conséquent, la valeur moyenne de la luminosité.

Suivant un mode de réalisation, l'unité de commande 125 déclenche les mesures M1 décrites précédemment durant les phases d'extinction 481, 483 etc.. et les mesures M2 durant les phases d'allumage 482, 484... Ces mesures peuvent être ensuite traitées de manière diverses, statistiques ou non, de manière à recueillir une diversité de données pouvant être utilisées dans la régulation.

Si l'on vient alimenter la LED au moyen de circuit analogique permettant de générer des courants continus (convertisseurs "buck" ou "boost"), l'on pourra alors utiliser un mécanisme de régulation plus proche de celui représenté dans la figure B ou l'on voit que l'alimentation en continu de la LED correspond à une série de phases 491, 493 ... qui sont entrecoupées par de brèves phases d'extinction 492 permettant d'aménager les mesures M1.

Diverses variantes sont possibles, clairement.

Comme on le voit, sur ces premiers exemples, l'on peut ainsi affiner significativement la connaissance de la "réponse" du milieu ambiant réfléchissant et d'en déduire une stratégie de régulation plus appropriée.

## 2. Description d'un second mode de réalisation (un photo-capteur - deux faisceaux, respectivement large et étroit)

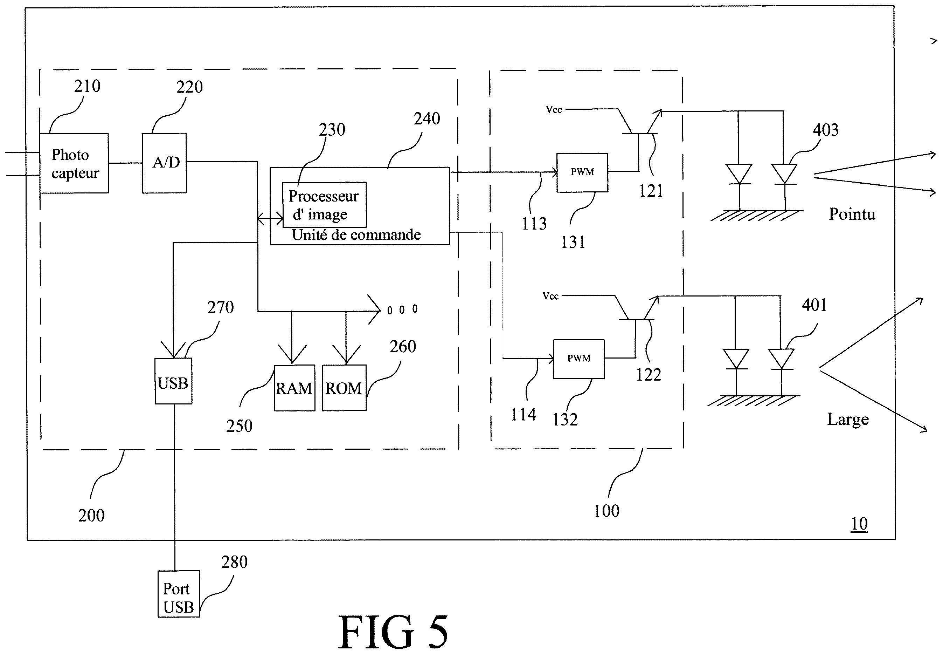

L'on décrit à présent, en relation avec la figure 5, un second mode de réalisation d'une lampe frontale 10 comportant un unique photocapteur (référencé 210 à nouveau), mais permettant la génération de deux faisceaux lumineux, respectivement étroit et large, générés par les LEDs 403 et 401, respectivement.

La lampe 10 comporte un module de puissance 100 comportant une source d'alimentation, par exemple une batterie (non représentée sur la figure), laquelle génère une tension d'alimentation Vcc, et deux commutateurs de puissance, respectivement 121 et 122, permettant d'alimenter en courant les diodes LED 403 et 401 et respectivement commandées par les circuits 131 et 132, respectivement, mettant en oeuvre la modulation MLI ou PWM. Les commutateurs 121 et 122 sont par exemple de type à semiconducteur tel qu'un transistor bipolaire, un transistor FET (*Field Effect Transistor*) ou MOS (*Metal Oxyde Semiconductor*) ou MOSFET.

Les deux transistors 121 et 122 sont respectivement commandés par les informations ou les signaux de commandes 113 et 114 générés par une unité de commande 240 intégrée au sein du module de commande 200.

Il ne s'agit ici que d'un mode de réalisation, et un homme du métier pourra clairement utiliser d'autres exemples d'architecture, et notamment en regroupant les deux circuits 121 et 122 au sein d'un même circuit électronique.

Toujours en référence à la figure 5, l'unité de commande 240 intègre un processeur 230 communiquant via des bus d'adresses, de données et de commande conventionnels avec de la mémoire RAM 250, de la mémoire ROM ou EEPROM etc... 260.

Le photocapteur 210 est associé à un convertisseur analogique/numérique 220 permettant la conversion des signaux analogiques générés par celui-ci en une information numérique qui pourra ensuite être rendue accessible au processeur 230 via les bus de données, d'adresses etc...

Dans un mode de réalisation préféré, le capteur d'image 210 présente un axe sensiblement parallèle à l'axe des diodes LEDs en sorte que l'image, saisie par le capteur 210, correspondra à la zone éclairée par ces dernières.

Dans un autre mode de réalisation, un port USB 280 est accessible via un module USB 270 inclus dans l'unité de commande et connecté au bus, permettant l'échange de données suivant le standard USB. Particulièrement, l'interface USB permettra comme on le verra ci-après, le stockage de paramètres de réglage et de profils au sein de la lampe.

De cette manière, l'unité de commande peut communiquer avec un dispositif de traitement de données tel qu'un ordinateur, un ordinateur portable, une tablette tactile, un assistant personnel et voire même un téléphone intelligent (*Smartphone* suivant la littérature anglo-saxonne).

Il est à noter que le port USB n'est qu'un exemple illustratif d'un moyen de communication entre la lampe et un ordinateur, et qu'un homme du métier pourra envisager tout autre moyen de communication, notamment sans fil (*bluetooth, wifi etc*...). Dans un mode de réalisation particulier, la lampe frontale disposera même de sa propre adresse IP (Internet Protocol) de manière à pouvoir être aisément configurée, par exemple au moyen d'un serveur web dédié.

Une telle communication est particulièrement avantageuse notamment pour l'échange de données de configuration, tels que des « profils » qui permettent de venir stocker ou sélectionner, en tant que de besoin, des données de réglage de la lampe en fonction de son utilisation souhaitée par son propriétaire, et notamment pour mettre en oeuvre les exemples de diagrammes fonctionnels qui seront décrits ci-après. Alternativement ou cumulativement, les "profils" permettent, comme on le verra ci-après, de venir activer des procédures ou modes spécifiques de fonctionnement, notamment les modes statiques (débrayage de la régulation et de la commande de la géométrie du faisceau/pivotement du faisceau lumineux) ou dynamique (activation de la régulation).

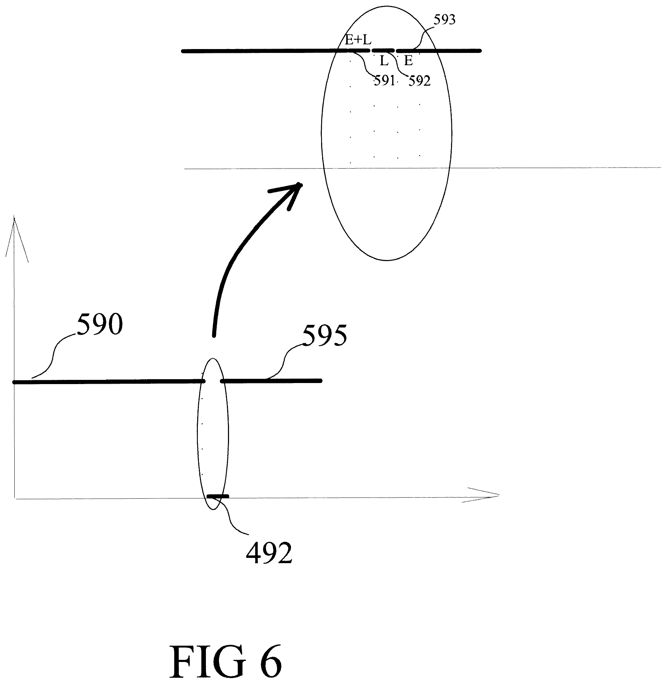

L'on décrit à présent plus spécifiquement, en référence à la figure 6, le fonctionnement de l'architecture présentée précédemment de manière à permettre une régulation améliorée de la puissance d'émission des LEDs .

En particulier le chronogramme de la figure 6 illustre un fonctionnement de la lampe dans lequel, par exemple, les LEDs 401 et 403 sont alimentées par un courant continu dont la valeur est fixée au moyen de circuits convertisseurs adéquats (*buck* et/ou *boost*). durant des phases 590 et 595.

Périodiquement, par exemple tous les 2 millisecondes, l'on vient interrompre l'alimentation en courant continu des diodes LEDs 401 et 403 par une phase de mesures de diversité (représentée sur la figure par l'ellipse), laquelle comporte, comme on le voit sur la partie supérieure droite de la figure, une succession de trois étapes:

étape 1 (591): les deux LED 401 et 403 sont alimentées ensemble, permettant une première mesure M1 qui est la réponse du milieu ambiant réfléchissant sous l'éclairage conjoint des deux faisceaux, ainsi que la lumière ambiante;

étape 2 (592): lé faisceau étroit est éteint de manière à permettre une seconde mesure M2 qui est la réponse du milieu ambiant réfléchissant sous l'éclairage du seul faisceau large, ainsi que la lumière ambiante;

étape 3 (593) : le faisceau large est éteint de manière à permettre une troisième mesure M3 qui est la réponse du milieu ambiant réfléchissant sous l'éclairage du seul faisceau étroit, ainsi que la lumière ambiante.

Si l'on désigne par les variables L et E les luminosités respectives des faisceaux large et étroit, et par $L_{ambiante}$ la luminosité ambiante, l'on peut écrire:

$$M1 = L_{ambiante} + L + E$$

$$M2 = L_{ambiante} + L$$

$$M3 = L_{ambiante} + E$$

Ce qui permet d'écrire finalement:

$$L_{ambiante} = M2 + M3 - M1$$

mais également

$$L = M1 - M3$$

$$E = M1 - M2$$

Ou

$$L = M2 - L_{ambiante}$$

et

$$E = M3 - L_{ambiante}$$

Comme on le voit sur ce mode de réalisation, il n'est pas nécessaire d'éteindre conjointement les deux faisceaux pour déterminer très simplement une estimation de la part de la luminosité ambiante dans la réponse du photocapteur.

Ce qui est un avantage significatif de ce mode de réalisation.

Comme pour l'autre mode de réalisation, l'on pourra envisager diverses stratégie de régulation.

En particulier, l'on pourra décider, dans un mode de configuration donné correspondant à un profil particulier, que le mécanisme de régulation régulera l'alimentation en courant des LEDs uniquement sur les variables L et E de manière à réduire la perturbation possible intervenant sur les sources lumineuses formant l'environnement extérieur. Ainsi, si le "retour" de la lampe n'a pas changé mais qu'une perturbation extérieure est intervenue, le mécanisme de régulation peut discriminer cette perturbation extérieure comme ne faisant pas partir des retour (L, E) des faisceaux générés par la lampe et maintenir, en conséquent, l'alimentation en courant des diodes LEDs.

Ces stratégies pourront d'ailleurs être combinées opportunément avec des "profils" de fonctionnement type, configurés au moyen du port USB 280 de la figure 5.

Par exemple, Dans un premier mode de configuration correspondant à une activité dite "jogging/marche" par exemple, le processeur 230 maintiendra une régulation basé sur une luminosité constante quand bien même le porteur de la lampe viendrait à croiser des feux d'un véhicule arrivant en sens contraire.

Alternativement, dans un second mode de configuration correspondant par exemple à une activité de spéléologie, l'on pourra décider au contraire que le mécanisme de régulation mis en oeuvre par le processeur 230 tiendra moins compte des valeurs de L et/ou E de manière à éviter les perturbations résultant du passage de la corde devant le photocapteur.

Dans un mode de réalisation particulier, une périodicité de fortes variations de la réponse obtenue sur les valeurs de L et/ou E pourra être détectée par le mécanisme de régulation comme une situation d'escalade, et pourra alors entraîner le débrayage de la régulation, de manière à assurer une luminosité constante au grimpeur jusqu'à ce qu'il se soit hissé en haut de la corde.

Clairement, toute autre stratégie est envisageable, des plus simples aux plus sophistiquées, venant combiner les différentes variables L, E et $L_{ambiante}$ résultant des mesures de diversité effectuées durant les phases 591-593.

### 3. Description d'un troisième mode de réalisation (un photo-capteur - deux faisceaux désaxés)

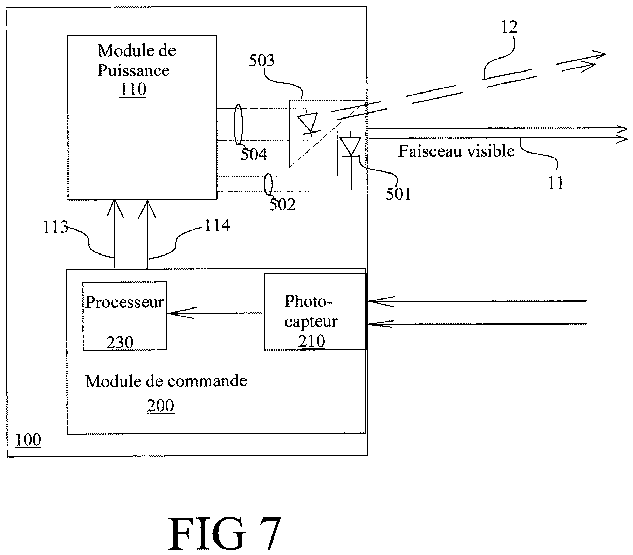

L'on décrit à présent, en référence à la figure 7, un troisième mode de réalisation dans lequel le module de puissance 100 de la figure 5 vient commander à présent un jeu de deux diodes 501 et 503 (une seule diode étant représentée pour chaque faisceau) qui présentent des axes légèrement différents. Les deux séries de diodes 501-503 sont alimentées au moyen du module de puissance 110, respectivement via les conducteurs 502 et 504, eux également commandés par le module de commande 200.

Si la figure 7 illustre un mode de réalisation ne comportant que deux séries de diodes et par là, deux axes 11 et 12 distincts, il est clair qu'un homme du métier pourra adapter l'invention de manière à produire un nombre de faisceaux lumineux et d'axes supérieurs à deux.

Dans le mode de réalisation qui est illustré, l'on observe que le module de commande 200 génère deux informations ou signaux de commandes, respectivement 113 et 114 , qui sont destinées à venir commander la puissance émises par les séries de LED qui leur correspondent, ie les LED 501 et 503.

D'un point de vue dynamique, comme précédemment pour les deux premiers modes de réalisation qui ont été décrits, le circuit de régulation (ie le processeur 230) commande une phase d'extinction, pendant une durée non visible par le porteur de la lampe, d'un des deux faisceaux de manière à pouvoir capter la réponse spécifique du photocapteur 210 durant cette phase d'extinction.

De cette manière, le microprocesseur, sous la conduite d'un programme adéquat, peut collecter plusieurs mesures de diversité sur un même milieu réfléchissant ambiant de manière à affiner le procédé de régulation de la lampe.

### 4. Description d'un quatrième mode de réalisation (un photo-capteur - un faisceau de lumière modulé)

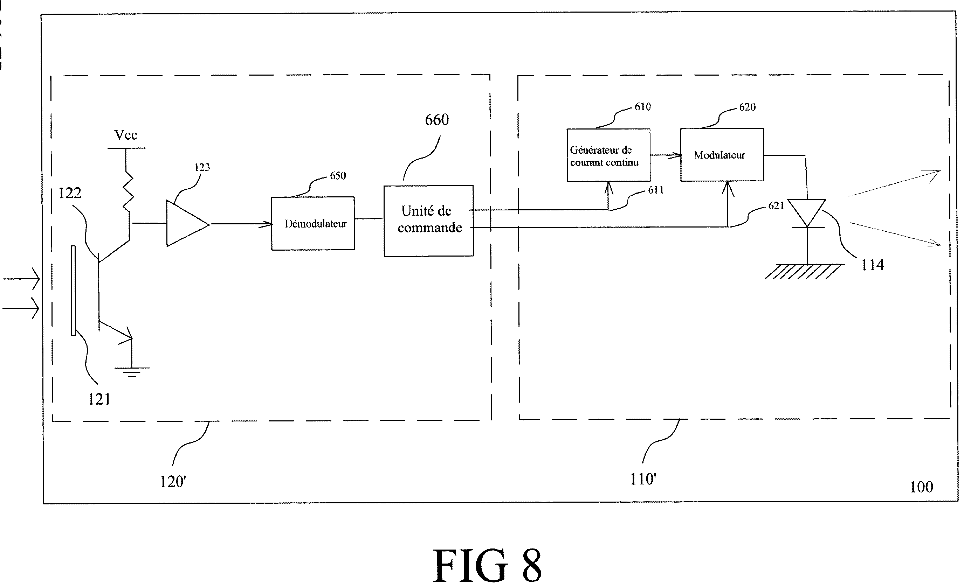

On décrit à présent, en référence à la figure 8, un quatrième mode de réalisation qui diffère du premier mode de réalisation en ce que le faisceau généré par la diode 114 (les éléments communs avec ceux de la figure 1 conservent la même référence) est modulé au moyen d'une information de modulation de manière à permettre au capteur 121 de capter une signal plus complexe permettant d'enrichir la diversité des informations recueillies de manière à discriminer plus aisément différentes sources lumineuses, dont la source lumineuse modulée générée par la lampe portative, et d'améliorer le dispositif de régulation de la lampe.

A cet effet, le bloc de puissance 110 de la figure 2 est remplacé par un bloc 110' comporte un générateur de courant continu 610 commandé par un premier signal de commande 611 et un modulateur 620 recevant une information de modulation sur un conducteur 621.

Le générateur de courant continu 610 pourra être constitué de tout circuit électronique analogique permettant d'effectuer une conversion de courant, et utilisant notamment des convertisseurs adéquats ("*buck*" ou "*boost*", selon le cas) permettant de convertir la tension d'une batterie en un courant continu variable commandé par l'information véhiculée sur le conducteur 611.

De son côté, le modulateur 620 pourra être tout type de modulateur, notamment un modulateur en amplitude et/ou en fréquence, permettant d'ajouter au courant continu une composante alternative (à une fréquence suffisamment élevée pour ne pas être perceptible pour l'oeil humain) fonction de données de modulation.

L'on pourra également employer tout autre type de modulation.

De son côté, le bloc de commande 120 est remplacé par un bloc 120' comportant, outre le photocapteur 121, l'optique 122 et un amplificateur de signal 123, un démodulateur 650 permettant d'extraire du flux lumineux capté par le photocapteur une information de modulation. Une unité de commande 660 peut alors exploiter ces diverses informations pour en tirer une stratégie de régulation adéquate du courant continu servant à alimenter la LED.

Clairement, l'on pourra également utiliser la modulation dans le cas d'une pluralité de faisceaux, comme pour le second mode de réalisation comportant un faisceau étroit et un faisceau large. Dans cette situation particulière, on pourra notamment moduler le faisceau étroit avec une première information de modulation et le faisceau large avec une seconde information de modulation de manière à permettre au photocapteur de recueillir conjointement les deux informations et à permettre une discrimination facilitée. La modulation pourra également servir, le cas échéant, à une communication entre deux lampes.

Comme précédemment, une grande variété de stratégies de régulation est possible.

## Avantages de l'invention

Grâce à la diversité de mesures qui sont opérées lors de la phase d'extinction sélective, le mécanisme de régulation peut être rendu plus performant.

On parvient ainsi à élargir le cône du photocapteur de manière à lui permettre d'intégrer d'avantage la luminosité ambiante ainsi que les retours des faisceaux lumineux.

C'est un avantage important par rapport à la lampe dynamique conventionnelle qui nécessitait l'emploi d'un capteur à cône relativement étroit, pour éviter, par exemple, d'être trop perturbé par des feux d'automobiles venant croiser le porteur de la lampe.

On notera également que les mesures de diversité peuvent être effectuées, non seulement au niveau de la luminosité comme cela a été décrit dans les exemples précédents, mais également sur le contraste.

L'on a ainsi observé les avantages suivant résultant de l'utilisation de l'invention:

- une plus grande robustesse du mécanisme de régulation au phénomène d'un éclairage perturbant;
- la possibilité d'élargir le champ de vision du capteur, ce qui est rendu possible par la discrimination des sources lumineuses du fait des mesures de diversité; et par conséquent,
- une atténuation des phénomènes de "pompage" liés aux variation de l'éclairage ambiant (typiquement : un gyrophare; passage devant une grille)
- grâce à cet accroissement possible du champ de vision, la réduction du phénomène lié à l'objet brillant (tel qu'un outil) venant réduire intempestivement l'éclairement;
- une moindre sensibilité aux perturbations liées aux objets de faible surface (la corde par exemple).

## Revendications

**1.** Lampe portative comportant:

- une source lumineuse (114, 403, 405) composée d'une ou plusieurs sources permettant de générer au moins deux faisceaux lumineux, comportant au moins un faisceau large et au moins un faisceau étroit;
- des moyens (100, 110) de commande de la luminosité desdits faisceaux lumineux en réponse à une information ou signal de commande;
- un module de commande (120, 200) destiné à générer ladite information ou ledit signal de commande;
**caractérisée en ce que** ledit module de commande (120, 200) comporte au moins un photocapteur (122, 210) et un circuit de régulation (125, 125', 230) commandant une première phase d'extinction pendant une durée non visible par le porteur de la lampe, dudit faisceau large, ladite première phase d'extinction étant combinée avec au moins une mesure réalisée(s) par le ou les capteur(s),
ledit circuit de régulation (125, 125', 230) commandant une seconde phase d'extinction dudit faisceau étroit pendant une durée non visible par le porteur de la lampe, ladite second phase d'extinction étant combinée avec au moins une mesure réalisée(s) par le ou les capteur(s), puis calcule la luminosité ambiante et adapte la puissance des faisceaux en fonction de la luminosité calculée.

**2.** Lampe portative selon la revendication 1 **caractérisé en ce qu'**elle comporte un unique photocapteur et un unique faisceau de type LED.

**3.** Lampe portative selon la revendication 2 **caractérisée en ce qu'**elle comporte un unique photocapteur (210) et deux faisceaux respectivement Large et Etroit générés par au moins une première LED (401) et au moins une seconde Led (403).

**4.** lampe portative selon la revendication 3 **caractérisée en ce que** ledit circuit de régulation provoque périodiquement:

- l'extinction dudit faisceau Etroit, associée à une première mesure effectuée par ledit photocapteur (210);
- l'extinction dudit faisceau Large, associée à une seconde mesure effectuée par ledit photocapteur (210).

**5.** Lampe portative selon la revendication 4 **caractérisée en ce que** ledit circuit de régulation effectue le calcul de la luminosité ambiante suivant la formule:

$$L_{ambiante} = M2 + M3 - M1$$

avec

M1 étant une mesure effectuée lorsque les deux faisceaux sont allumés;
M2 étant la mesure lors de l'extinction du faisceau Etroit;
M3 étant la mesure lors de l'extinction du faisceau Large.

**6.** Lampe portative selon la revendication 5 **caractérisé en ce que** le circuit de régulation adapte la puissance du faisceau lumineux en fonction des seules valeurs de L = M1 - M3 et E = M1 - M2 , excluant l'intervention de la luminosité ambiante.

**7.** Lampe portative selon la revendication 5 **caractéri-**

sé en ce que le circuit de régulation adapte la puissance du faisceau lumineux en fonction de la seule valeur $L_{ambiante}$. 2

8. Lampe portative selon l'une des revendications précédentes **caractérisée en ce qu'**elle comporte au moins deux faisceaux désaxés.

9. Lampe portative selon l'une des revendications précédentes **caractérisée en ce qu'**elle comporte des moyens de configuration, notamment suivant un ou plusieurs profils déterminés, ladite configuration étant réalisée au moyen d'un port de communication tel que USB permettant la communication avec un ordinateur, une tablette tactile ou un téléphone intelligent (*smartphone*).

10. Lampe portative selon l'une des revendications précédentes **caractérisée en ce que** le courant d'alimentation desdites LED est modulé de manière à porter une information de modulation.

11. Lampe portative selon la revendication 9 **caractérisée en ce qu'**elle consiste en une lampe frontale.


**Patentansprüche**

1. Tragbare Lampe mit:

   - einer Lichtquelle (114, 403, 405) bestehend aus einer oder mehreren Quellen, wodurch es möglich wird, mindestens zwei Lichtbündel zu erzeugen, mit mindestens einem breiten Strahl und mindestens einem schmalen Strahl:
   - Steuermitteln (100, 110) für die Helligkeit der genannten Lichtbündel als Reaktion auf eine Information oder auf ein Steuersignal;
   - einem Steuermodul (120, 200), um besagte Information oder besagtes Steuersignal zu erzeugen;
   **dadurch gekennzeichnet, dass** das Steuermodul (120, 200) mindestens einen Fotosensor (122,210) umfasst sowie eine Regelschaltung (125, 125', 230), die eine erste Phase der Auslöschung des breiten Strahls während einer für den Träger der Lampe nicht sichtbaren Dauer steuert, wobei diese erste Auslöschungsphase mit mindestens einer Maßnahme(n) von Seiten des oder der Sensor(en) kombiniert ist, wobei die Regelschaltung (125, 125', 230) eine zweite Phase der Auslöschung des schmalen Strahls steuert, während einer für den Träger der Lampe nicht sichtbaren Dauer, wobei diese zweite Auslöschungsphase mit mindestens einer Maßnahme(n) von Seiten des oder der Sensor(en) kombiniert ist, dann berechnet sie die Umgebungshelligkeit und passt die Leistung der Bündel der berechneten Helligkeit an.

2. Tragbare Lampe nach Anspruch 1, **dadurch gekennzeichnet, dass** sie einen einzigen Fotosensor umfasst und einen einzigen Strahl vom Typ Leuchtdiode.

3. Tragbare Lampe nach Anspruch 2, **dadurch gekennzeichnet, dass** sie einen einzigen Fotosensor (210) umfasst und zwei Strahlen, einen breiten und einen schmalen, erzeugt von einer ersten Leuchtdiode (401) und mindestens einer zweiten Leuchtdiode (403).

4. Tragbare Lampe nach Anspruch 3, **dadurch gekennzeichnet, dass** besagte Regelschaltung regelmäßig folgendes bewirkt:

   - die Auslöschung des genannten schmalen Strahls, mit einer ersten Maßnahme von Seiten des Fotosensors (210);
   - die Auslöschung des genannten breiten Strahls, mit einer zweiten Maßnahme von Seiten des Fotosensors (210);

5. Tragbare Lampe nach Anspruch 4, **dadurch gekennzeichnet, dass** die Regelschaltung die Berechnung der Umgebungshelligkeit [luminosité ambiante] nach folgender Formel durchführt: $L_{ambiante} = M2 + M3 - M1$
   wobei

   M1 eine Maßnahme ist, die durchgeführt wird, wenn beide Strahlen angeschaltet sind;
   M2 die Maßnahme bei der Auslöschung des schmalen Strahls ist;
   M3 die Maßnahme bei der Auslöschung des breiten Strahls ist;

6. Tragbare Lampe nach Anspruch 5, **gekennzeichnet dadurch, dass** die Regelschaltung die Leistung des Lichtstrahls nur nach den Werten von $L = M1 - M3$ und $E = M1 - M2$ anpasst, ohne Berücksichtigung der Umgebungshelligkeit.

7. Tragbare Lampe nach Anspruch 5, **gekennzeichnet dadurch, dass** die Regelschaltung die Leistung des Lichtstrahls nur nach dem Wert $L_{ambiante}$. 2 anpasst.

8. Tragbare Lampe nach einem der vorhergehenden Ansprüche, **dadurch gekennzeichnet, dass** sie mindestens zwei außeraxiale Strahlen umfasst.

9. Tragbare Lampe nach einem der vorhergehenden Ansprüche, **dadurch gekennzeichnet, dass** sie Konfigurationsmittel umfasst, insbesondere gemäß einem oder mehreren bestimmten Profilen, wobei die Konfiguration mittels eines Kommunikationsanschlusses wie USB verwirklicht wird, wodurch die Kommunikation mit einem Computer, einem Touchscreen oder einem Smartphone möglich wird.

10. Tragbare Lampe nach einem der vorhergehenden Ansprüche, **dadurch gekennzeichnet, dass** die Stromversorgung der Leuchtdiode moduliert wird, um eine Modulationsinformation zu befördern.

11. Tragbare Lampe nach Anspruch 9, **dadurch gekennzeichnet, dass** sie aus einer Stirnlampe besteht.

**Claims**

1. Portable lamp comprising :

   - a light source (114, 403, 405) comprising one or more sources for generating at least two light beams, comprising at least a wide beam and at least a narrow beam;
   - means (100, 110) for controlling the brightness of said light beams in response to a control information or a control signal;
   - a control module (120, 200) for generating said control information or said control signal ; **characterized in that** said control module (120, 200) comprises at least at least a photo sensor (122, 210) and a regulation circuit (125, 125', 230) for controlling a first switch-off phase of said wide beam during a period not visible to the holder of the lamp, said first switch-off phase being combined with at least one measurement made by the photo sensor(s), said regulation circuit (125, 125', 230) controlling a second switch-off phase of said narrow beam during a period not visible to the holder of the lamp, said second switch-off phase being combined with at least one measurement made by the photo sensor(s), then computes the ambient light and adjusts the brightness of the light beam in accordance with the computed light.

2. Portable lamp according to claim 1 **characterized in that** it comprise one single photo sensor and one single LED type beam.

3. Portable lamp according to claim 2 **characterized in that** it comprises one single photo sensor (210) and two beams, respectively Wide and Narrow, generated by at least a first LED (401) and a second LED (403).

4. Portable lamp according to claim 3 **characterized in that** said regulation circuit periodically performs :

   - a switch-off of said Narrow beam, combined with a first measure performed by said photo sensor(s) (210);
   - a switch-off of said Wide beam, combined with a second measure performed by said photo sensor(s) (210).

5. Portable lamp according to claim 4 **characterized in that** said regulation circuit performs the computation of the ambient light in accordance with the following formula :

$$L_{ambiante} = M2 + M3 - M1$$

With

   M1 being a measure performed when both beams are on ;
   M2 being a measure performed during the switch-off of the Narrow beam ;
   M3 being a measure performed during the switch-off of the Wide beam.

6. Portable lamp according to claim 5 **characterized in that** said regulation circuit adjusts the power of the light beam in accordance with the sole values L = M1 - M3 and E = M1 - M2 , at the exclusion of the ambient light.

7. portable lamp according to claim 5 **characterized in that** said regulation circuit adjusts the brightness of the light beam in accordance to the sole value $L_{ambiante}$. 2

8. Portable lamp according to anyone of the preceding claims **characterized in that** it comprises at least two unaligned beams.

9. Portable lamp according to anyone of the precedent claims **characterized in that** it comprises configuration means, in particular according to one or more predetermined profiles, said configuration being performed by means of a communication port of the type USB port allowing communication with a computer, a touch pad or a smartphone.

10. Portable lamp according to anyone of the preceding claims **characterized in that** the powering current of said LED is modulated in order to convey a modulation information.

11. Portable lamp according to claim 9 **characterized in that** it is a headlamp.

16

11

Organe de
commande

13

Capteur
optique

14

# FIG 1

Vcc

123

125

122

Unité de
commande

PWM

Vcc

114

126

113

111

121

112

120

110

100

**FIG 2**

EP 2 706 823 B1

126          111

125'

I/O

200

Processeur

210

USB

240

RAM

220

ROM

230

port
USB

250

FIG 3

FIG 4a

FIG 4b

FIG 5

EP 2 706 823 B1

**FIG 6**

FIG 7

EP 2 706 823 B1

Vcc

660

123

122

610

620

Générateur de courant continu

Modulateur

650

611

Démodulateur

Unité de commande

621

121

114

120'

110'

100

FIG 8

**EP 2 706 823 B1**

## RÉFÉRENCES CITÉES DANS LA DESCRIPTION

**Documents brevets cités dans la description**

- WO 2009133309 A
- EP 2012000982 W
- EP 2012000984 W
- US 2005099798 A